# EUROPEAN PATENT APPLICATION

(11) **EP 1 244 121 A1**
(43) Date of publication of application: **25.09.2002**
(21) Application number: 02002969.0
(22) Date of filing: 11.02.2002
(51) Int. Cl.: H01G 9/00

(54) **Electrochemical capacitor**

(30) Priority: 19.03.2001 JP 2001077611
(71) Applicant: NGK INSULATORS, LTD., Nagoya-City, Aichi Prefecture 467-8530 (JP)
(72) Inventor: Niiori, Yusuke, Nagoya-city, Aichi-prefecture 467-8530 (JP); Katsukawa, Hiroyuki, Nagoya-city, Aichi-prefecture 467-8530 (JP)
(74) Representative: Leson, Thomas Johannes Alois, Dipl.-Ing.

(57) **Abstract**

An electrochemical capacitor includes: an organic electrolyte solution, and an electrode body including polarized electrodes having, as a main component, a partially oxidized carbon material having fine crystals of graphite-like carbon, a separator, and current collectors, the electrode body being immersed in the organic electrolyte solution, and the polarized electrodes expanding in volume due to charge and contracting in volume due to discharge. Mechanical stress is applied to a carbon material having fine crystals of graphite-like carbon to introduce cracks and/or fractures thereinto, and the carbon material is partially oxidized to give a raw material for the polarized electrodes. The electrochemical capacitor can contribute to an increase in capacity of the capacitor.

## Description

### Background of the Invention and Related Art Statement

The present invention relates to an electrochemical capacitor.

An electrochemical capacitor is used in a backup power source for electronic devices and in batteries for various transport machines such as motor vehicles for its farad-class large capacity and excellent charge-discharge cycle characteristics. The use in the storage of electric power at nighttime has also been examined from the viewpoint of effective use of energy.

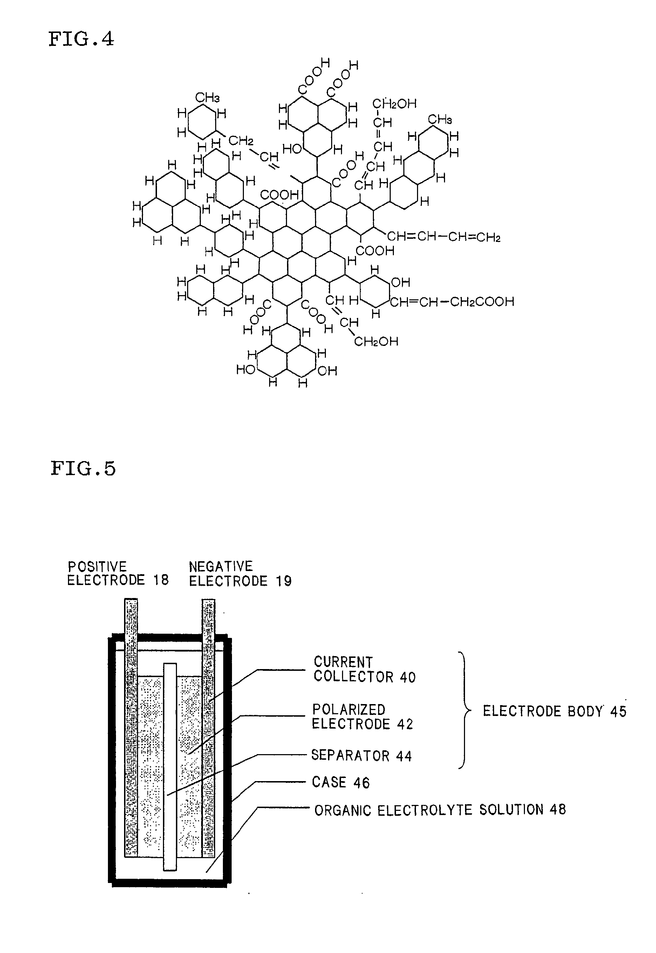

For example, as shown in Fig. 5, such a capacitor has a structure that an electrode body 45 having a positive electrode 18, a negative electrode 19, and a separator 44 between the two electrodes 18 and 19 is immersed in an organic electrolyte solution 48 in a case 46. Each of the positive electrode 18 and the negative electrode 19 has a current collector 40 and a polarized electrode 42 tightly connected to the current collector 40.

A partially oxidized carbon material having fine crystals of graphite-like carbon is the main component of polarized electrodes of the above electrochemical capacitor. There have been used size-controlled meso-phase carbon particles subjected to an infusible treatment or needle cokes as a precursor (a carbon material having fine crystals of graphite-like carbon) before partial oxidization.

However, when the above precursor is partially oxidized, the carbon material as the precursor is not partially oxidized effectively because of insufficient penetration of an oxidizing agent into the precursor. Therefore, there has been a difficulty in corresponding to a further increase in capacity of an electrochemical capacitor.

### Summary of the Invention

The present invention has been made in view of the problem of the prior art and aims to provide an electrochemical capacitor capable of contributing to an increase in capacity of the capacitor by applying mechanical stress to a carbon material having fine crystals of graphite-like carbon to introduce cracks and/or fractures thereinto and partially oxidizing the carbon material to be used as a material for polarized electrodes.

According to the present invention, there is provided an electrochemical capacitor comprising:
an organic electrolyte solution, and
an electrode body comprising:
   polarized electrodes having, as a main component, a partially oxidized carbon material having fine crystals of graphite-like carbon,
   a separator, and
   current collectors,
the electrode body being immersed in the organic electrolyte solution, and the polarized electrodes expanding in volume due to charge and contracting in volume due to discharge;
wherein mechanical stress is applied to a carbon material having fine crystals of graphite-like carbon to introduce cracks and/or fractures thereinto, and the carbon material is partially oxidized to give a raw material for the polarized electrodes.

### Brief Description of the Drawings

Fig. 1 is a scanning electron microscope (SEM) photograph showing surface conditions of a carbon material before mechanical stress is applied thereto.
Fig. 2 is a scanning electron microscope (SEM) photograph showing surface conditions of a carbon material after mechanical stress is applied thereto.
Figs. 3(a) and 3(b) are explanatory views each showing a structure of a carbon material to be suitably used in the present invention.
Fig. 4 is an explanatory view schematically showing a molecular structure of a carbon material to be suitably used in the present invention.
Fig. 5 is a schematic view showing an embodiment of an electrochemical capacitor.

### Detailed Description of the Invention

In an electrochemical capacitor of the present invention, mechanical stress is applied to a carbon material having fine crystals of graphite-like carbon to introduce cracks and/or fractures thereinto, and then the carbon material is partially oxidized to give a raw material for polarized electrodes.

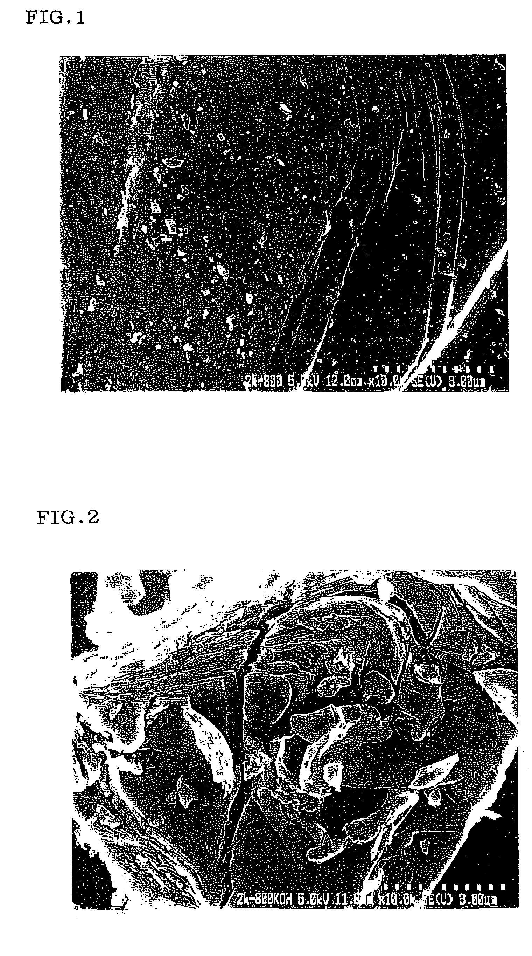

As shown in Fig. 2, numerous cracks and/or fractures are introduced in a carbon material used in the present invention by applying mechanical stress to a conventional carbon material having fine crystals of graphite-like carbon (ref. Fig. 1) to cause cleavage, intergranular fracture, or the like.

This enables an oxidizing agent to easily penetrate into the carbon material upon a partially oxidizing agent, and the carbon material is partially oxidized effectively. Therefore, the partially oxidized carbon material having fine crystals of graphite-like carbon can be improved in characteristics in comparison with a conventional carbon material where mechanical strength is not applied.

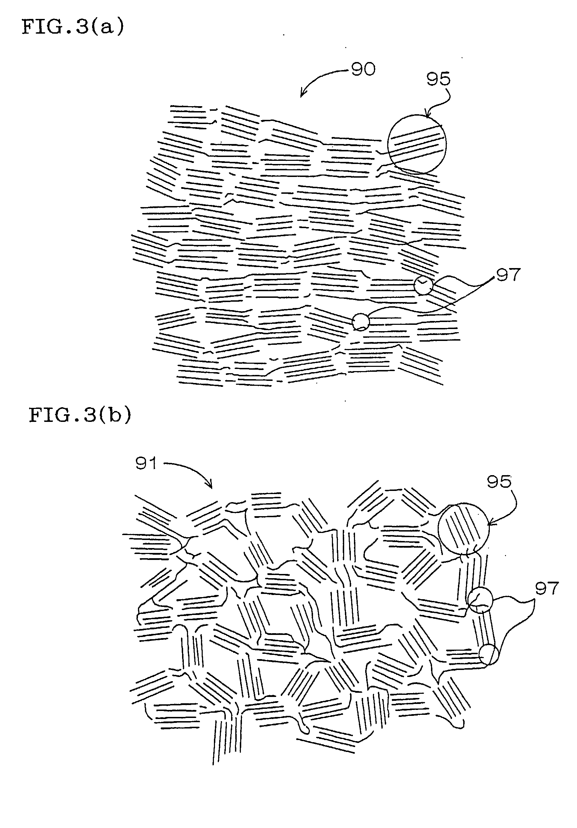

"A partially oxidized carbon material having fine crystals of graphite-like carbon" is described hereinbelow. Carbonization of various organic matters at a temperature of 1000°C or lower generally gives a chaotically-layered carbon 90 as shown in Fig. 3(a) or a chaotically-layered carbon 91 with an incomplete 6-membered cyclic network phase as shown in Fig. 3(b). Fine crystals of graphite-like carbon denote fine crystals 95 having a size within the range from 0.1 nm to several tens nm and being layered with regularity in the chaotically-layered carbons 90, 91.

When these chaotically-layered carbons 90, 91 are oxidized, for example, in air; first, a portion 97 having low regularity as a crystal is oxidized and volatilized as carbon monoxide or carbon dioxide. As the oxidization further proceeds, an edge portion of the fine crystal carbon 95 itself or an incomplete portion of the 6-membered cyclic structure is oxidized, and finally, all of the carbons are oxidized to be gasified.

However, oxidization can be held partially by controlling oxidation conditions, and a thus-obtained carbon material is "a partially oxidized carbon material having fine crystals of graphite-like carbons." In this carbon material, as shown in Fig. 4, an acidic functional group is mainly bonded at an edge of a 6-membered cyclic network membrane or in a portion having an incomplete structure of the fine crystals. As a suitable method for partial oxidation, there may be suitably employed a thermal treatment using an oxidizing gas such as air or oxygen, or a chemical oxidation treatment using hot nitric acid or the like. Incidentally, Fig. 4 schematically shows an embodiment of a molecular structure of a carbon material, and a carbon material of the present invention is by no means limited to the carbon material having the structure shown in Fig. 4.

To produce a polarized electrode to be used in the present invention, mechanical stress is applied to a carbon material having fine crystals of graphite-like carbon to introduce cracks and/or fractures thereinto, and the carbon material is partially oxidized. Then, a conductive agent such as carbon black and an organic binder are added to and mixed with the partially oxidized carbon material to give a mixture, and the mixture is formed into a sheet. For the current collector, aluminum foil subjected to an etching treatment on the surface thereof may be suitably used. For the electrode terminal, highly purified aluminum may be suitably used in view of electric conductivity and stability for electrolyte solution. As the separator, a paper separator for a condenser or a porous resin film of polyethylene, polypropylene, or polytetrafluoroethylene (trade name:Teflon) may be used.

In addition, as an electrolyte solution to be used in the present invention, an organic electrolyte solution is preferably used because it has a high voltage proof as a capacitor and can increase an energy density. As a solvent for the organic electrolyte solution, there may be suitably used propylene carbonate, γ-butyl lactone, ethylene carbonate, dimethyl carbonate, diethyl carbonate, ethylmethyl carbonate, or sulfolane. These may be used alone, or some of them may be mixed, and other solvents or additives such as a surface active agent may be added there to give the solvent. Examples of the electrolytes are quaternary ammonium salts, e.g., BF₄ or PF₆ salts of tetraethyl ammonium, tetrabutyl ammonium, or thyelhylmethyl; BF₄ or PF₆ salts of quaternary phosphonium; etc.

The present invention is hereinbelow described in more detail on the basis of Examples. However, the present invention is by no means limited to the Examples.

### (Examples 1 - 2, Comparative Example)

Carbon materials A - C were prepared under the following conditions:

### ( Carbon material A: used in Example 1 )

200 g or petroleum pitch without an infusible treatment was subjected to a thermal treatment in a nitrogen atmosphere at 800°C for 2 hours with a temperature-rising rate of 100°C /hour to be fused and carbonized, and then cooled to room temperature.

Then, the obtained fused solid was ground with mechanical stress applied thereto by the use of a ball mill to give a carbon powder having an average particle diameter of 27 µm.

Further, 50g of the obtained carbon powder was put in an alumina crucible together with 100g of potassium hydroxide, and subjected to a thermal treatment in a nitrogen atmosphere at 800°C for 2 hours to be partially oxidized, and then cooled to room temperature.

To the mixture was added water to dissolve potassium hydroxide and potassium carbonate. The carbon powder was separated from the solution by filtration, washed with water, and then dried.

### ( Carbon material B: used in Example 2 )

200 g of petroleum pitch which was granulated to have a diameter of about 100 µm and subjected to an infusible treatment was subjected to a thermal treatment in a nitrogen atmosphere at 800°C for 2 hours to be carbonized, and then cooled to room temperature.

Then, the obtained carbide was ground with mechanical stress applied thereto by the use of a vibrating mill to give a carbon powder having an average particle diameter of 25 µm.

Further, 50g of the obtained carbon powder was put in an alumina crucible together with 100g of potassium hydroxide, and subjected to a thermal treatment in a nitrogen atmosphere at 800°C for 2 hours to be partially oxidized, and then cooled to room temperature.

To the mixture was added water to dissolve potassium hydroxide and potassium carbonate. The carbon powder was separated from the solution by filtration, washed with water, and then dried.

### ( Carbon material C: used in Comparative Example )

Petroleum pitch without an infusible treatment was subjected to wet grinding to give a diameter of about 25 µm, and then subjected to an infusible treatment by oxidation at low temperature of 100 - 300°C.

Then, 200g of the treated granular material was subjected to a thermal treatment in a nitrogen atmosphere at 800°C for 2 hours to be carbonized, and then cooled to room temperature.

Further, 50g of the obtained carbide was put in an alumina crucible together with 100g of potassium hydroxide and subjected to a thermal treatment in a nitrogen atmosphere at 800°C for 2 hours to be partially oxidized, and then cooled to room temperature.

To the mixture was added water to dissolve potassium hydroxide and potassium carbonate. The carbon powder was separated from the solution by filtration, washed with water, and then dried.

Using the above carbon materials A - C, each electrochemical capacitor (Examples 1 - 2, Comparative Example) was produced as follows:

To 1g of the carbon material, 0.1 g of carbon black as a conductive agent and PTFE (polytetrafluoroethylene) as a binder were added, and these materials were kneaded and rolled into a sheet having a thickness of 0.5 mm.

The thus obtained carbon material sheet was punched to form discs having a diameter of 19 mm, which were used as positive and negative polarized electrodes. Two pieces of aluminum foil were used as the current collectors, and a piece of non-woven cloth of fiber glass was used as the separator. They were integrated into an electrode body, and the electrode body was immersed in an organic electrolyte solution to give a capacitor.

The integration was conducted in a glove box of an argon atmosphere of a dew point of - 80°C or below.

In the organic electrolyte solution were used propylene carbonate as the solvent and tetraethylammonium tetrafluoroborate (TEABF₄) as the solute with a concentration of 1 mol/L.

Since the organic electrolyte solution was used for an electrochemical reaction and for passing an electric current as well, a little excessive quantity of the solution was injected.

Finally, to the obtained capacitor, a constant current of 5 mA (cut-off voltage: 4V) was passed so as to synthesize an organic matter which becomes an active substance by the electrochemical reaction. With the condition being maintained, each electrochemical capacitor was evaluated. The results are shown in Table 1.

**Table 1**

| | Kind of Carbon material | Electrostatic capacity of electrochemical capacitor (F/cc) |
|---|---|---|
| Example 1 | Carbon material A | 40 |
| Example 2 | Carbon material B | 42 |
| Comparative Example | Carbon material C | 30 |

### ( Consideration )

Since numerous cracks and/or fractures as shown in Fig. 2 were introduced into the carbon materials by applying mechanical stress in Examples 1 - 2, an oxidizing agent could easily penetrate into the carbon materials upon partial oxidation; and thereby the carbon materials could be partially oxidized effectively in comparison with the carbon material in Comparative Example (ref. Fig. 1).

As obvious from the results shown in Table 1, this enabled to improve the electrostatic capacity of electrochemical capacitors in Examples 1 - 2 in comparison with the prior art

### (Comparative Example).

As described above, an electrochemical capacitor of the present invention can contribute to an increase in capacity of the capacitor by applying mechanical stress to a carbon material having fine crystals of graphite-like carbon to introduce cracks and/or fractures thereinto and partially oxidizing the carbon material to be used as a raw material for polarized electrodes.

An electrochemical capacitor includes: an organic electrolyte solution, and an electrode body including polarized electrodes having, as a main component, a partially oxidized carbon material having fine crystals of graphite-like carbon, a separator, and current collectors, the electrode body being immersed in the organic electrolyte solution, and the polarized electrodes expanding in volume due to charge and contracting in volume due to discharge. Mechanical stress is applied to a carbon material having fine crystals of graphite-like carbon to introduce cracks and/or fractures thereinto, and the carbon material is partially oxidized to give a raw material for the polarized electrodes. The electrochemical capacitor can contribute to an increase in capacity of the capacitor.

## Claims

1. An electrochemical capacitor comprising:
an organic electrolyte solution, and
an electrode body comprising:
polarized electrodes having, as a main component, a partially oxidized carbon material having fine crystals of graphite-like carbon,
a separator, and
current collectors,
the electrode body being immersed in the organic electrolyte solution, and the polarized electrodes expanding in volume due to charge and contracting in volume due to discharge;
wherein mechanical stress is applied to a carbon material having fine crystals of graphite-like carbon to introduce cracks and/or fractures thereinto, and the carbon material is partially oxidized to give a raw material for the polarized electrodes.

2. An electrochemical capacitor according to claim 1, wherein the polarized electrodes are ones obtained in such a manner that a conductive agent and an organic binder are added to and mixed with the partially oxidized carbon material to give a mixture, and the mixture is formed into sheets.

3. An electrochemical capacitor according to claim 1, wherein the current collector is aluminum foil subjected to an etching treatment on the surface thereof.

4. An electrochemical capacitor according to claim 1,
wherein the separator is one selected from the group consisting of a paper separator for a condenser, and a porous resin film of polyethylene, polypropylene, and polytetrafluoroethylene.
